# FASCICULE DE BREVET EUROPEEN

(11) **EP 3 331 726 B1**
(45) Date de publication et mention de la délivrance du brevet: **19.06.2019**
(21) Numéro de dépôt: 16757305.4
(22) Date de dépôt: 27.07.2016
(51) Int. Cl.: B60Q 1/00, B60Q 1/26

(54) **VEHICULE AUTOMOBILE COMPORTANT UN BLOC OPTIQUE D'ECLAIRAGE ET UN BLOC OPTIQUE DE SIGNALISATION AVEC UN ÉLÉMENT D'ANCRAGE INFÉRIEUR**
KRAFTFAHRZEUG MIT EINEM SCHEINWERFER UND EINER MIT EINEM UNTEREN VERANKERUNGSELEMENT AUFWEISENDEN SIGNALLEUCHTE
MOTOR VEHICLE COMPRISING A HEADLAMP UNIT AND AN OPTICAL SIGNALLING UNIT WITH A LOWER ANCHORING ELEMENT

(30) Priorité: 03.08.2015 FR 1557454
(43) Date de publication de la demande: 13.06.2018
(73) Titulaire: PSA AUTOMOBILES S.A., 78300 Poissy (FR)
(72) Inventeur: SIMANDRE, Stephane, 28130 Chartainvilliers (FR); CARROUGET, Alain, 28700 Levainville (FR)
(86) Numéro de dépôt international: PCT/FR2016/051952
(87) Numéro de publication internationale: WO 2017/021622

(56) Documents cités:
- EP-A2- 0 904 980
- DE-A1-102009 036 668
- FR-A1- 2 314 843
- FR-A1- 2 624 584
- FR-A1- 2 985 472
- US-A1- 2005 190 573

## Description

### Domaine de l'invention

La présente invention concerne d'une manière générale le domaine des systèmes d'éclairage et de signalisation pour véhicules automobiles.

Elle concerne en particulier un bloc optique de signalisation pour véhicule automobile destiné à être monté sur un bloc optique d'éclairage.

### Arrière-plan de l'invention

Les exigences réglementaires en matière de signalisation des véhicules automobiles ont évoluées ces dernières années et imposent désormais l'utilisation de feux diurnes, couramment désignés sous l'acronyme anglais DRL (Daytime Running Light), et s'allumant automatiquement lorsque le véhicule se déplace vers l'avant afin d'accroître sa visibilité dans des conditions de lumière du jour.

Cette nouvelle fonction de signalisation peut être intégrée au bloc optique d'éclairage avant du véhicule mais la surface éclairante minimale exigée ne rend pas cette intégration aisée.

De fait, cette fonction est souvent assurée par l'installation d'un bloc optique de signalisation spécifique implanté dans la calandre et surplombant le bloc optique d'éclairage.

Le montage d'un tel bloc optique de signalisation sur la structure de caisse du véhicule intervient en fin de ligne d'assemblage après celui du pare-choc et du bloc optique d'éclairage.

Les contraintes d'accessibilité associées à l'encombrement important de son boîtier imposent que sa mise en place sur le véhicule s'effectue par l'arrière selon un cheminement complexe en biais.

Une fois positionné, la fixation de ce second bloc optique est généralement assurée par l'intermédiaire de deux éléments d'ancrage situés aux deux extrémités latérales supérieures de son boîtier et fixés par vissage respectivement sur des attaches correspondantes prévues sur l'aile latérale de la carrosserie et sur le pare-choc.

A l'usage, il s'avère que ces deux seuls points de fixation latéraux ne permettent pas d'assurer un maintien suffisant du bloc optique de signalisation, ce qui engendre des vibrations à haute vitesse entrainant des bruits parasites et ne permet pas d'obtenir des jeux d'effleurement optimums avec les éléments adjacents du véhicule que sont l'aile latérale avant, le bord inférieur du capot moteur ainsi que le bord supérieur de la peau de pare-choc.

L'ajout d'un troisième point de fixation par vissage en partie basse de ce bloc optique de signalisation est difficilement envisageable du fait de l'environnement particulièrement encombré qui rend la zone peu visible et n'autorise pas l'insertion d'un outil de vissage. En outre, cela aurait pour conséquence d'augmenter de manière trop importante la durée de montage de ce bloc optique de signalisation.

On connaît de la demande de brevet française FR 2 985 472 un bloc optique d'éclairage pour véhicule automobile dont la partie basse du boîtier est pourvue d'un élément d'ancrage inférieur coopérant sans vissage avec une patte liée rigidement à ladite structure de caisse de ce véhicule.

Cet élément d'ancrage inférieur comprend deux flasques parallèles verticaux venus de matière avec le boîtier qui comprennent chacun une fente de réception s'étendant longitudinalement depuis leur extrémité arrière.

Lors de la mise en place du bloc optique d'éclairage par un mouvement de translation d'avant en arrière, la patte coulisse simultanément le long des deux fentes jusqu'à atteindre la portion de fond de ces dernières dont la largeur correspond à l'épaisseur de cette patte, de sorte à verrouiller verticalement le projecteur vis-à-vis de la structure de caisse du véhicule.

Malheureusement, les particularités de mise en place du bloc optique de signalisation rendent inenvisageable l'utilisation d'un dispositif de fixation de ce genre en partie basse de son boîtier.

Un véhicule selon le préambule de la revendication 1 est connu de FR 2 314 843.

### Objet et résumé de l'invention

La présente invention vise donc à fournir une solution fiable et économique permettant d'améliorer le maintien d'un tel bloc optique de signalisation sur le véhicule.

Elle propose à cet effet un véhicule comportant les caractéristiques définies dans la revendication 1.

Le verrouillage vertical du bloc optique de signalisation obtenu grâce à la coopération entre la patte en U de l'élément d'ancrage inférieur et une plaque plane rigide du bloc optique d'éclairage situé en dessous, permet de limiter considérablement les vibrations et par la même les bruits parasites générés.

L'invention permet en outre d'obtenir des jeux d'effleurement d'excellente qualité entre ce bloc optique de signalisation, le bord inférieur du capot moteur et le bord supérieur de la peau de pare-choc.

Selon des caractéristiques préférées du bloc optique de signalisation pour véhicule automobile selon l'invention, prises seules ou en combinaison :
- ledit élément d'ancrage inférieur comprend également une rampe d'engagement qui s'étend sous le corps principal du boîtierdu bloc optique de signalisation en s'inclinant vers l'arrière jusqu'à ladite patte en U ;
- ladite patte en U s'étend dans le prolongement de ladite rampe d'engagement en étant raccordée à cette dernière par sa branche supérieure ;
- ledit élément d'ancrage inférieur comporte au moins une ailette de renfort s'étendant transversalement depuis la face arrière de ladite rampe d'engagement et reliant la branche supérieure de ladite patte en U au corps principal du boîtier du bloc optique de signalisation ;
- ledit élément d'ancrage inférieur comporte une nervure arquée de renfort s'étendant longitudinalement au dessus de la branche supérieure de ladite patte en U ;
- l'extrémité libre de la branche inférieure de ladite patte en U est évasée ;
- ledit élément d'ancrage inférieur est venu de matière par moulage avec le corps principal du boîtier du bloc optique de signalisation ; et/ou
- ledit bloc optique de signalisation comporte deux éléments d'ancrage latéraux supérieurs comprenant chacun un pion destiné à s'insérer dans un trou correspondant ménagé sur la dite structure de caisse lors dudit montage.

Avantageusement, ladite plaque plane rigide est venue de matière par moulage avec le corps principal du boîtier du bloc optique d'éclairage.

### Brève description des dessins

L'exposé de l'invention sera maintenant poursuivi par la description détaillée d'un exemple de réalisation, donnée ci-après à titre illustratif mais non limitatif, en référence aux dessins annexés, sur lesquels :
- la figure 1 est une vue de côté d'un bloc optique de signalisation de véhicule automobile selon l'invention dont la partie basse du boîtier comporte un élément d'ancrage inférieur destiné à coopérer avec une patte plane ménagée sur le boîtier d'un bloc optique d'éclairage monté préalablement sur la structure de caisse du véhicule ;
- la figure 2 est une vue de face du bloc optique de signalisation selon l'invention après son montage sur le véhicule ;
- la figure 3 est une vue en perspective de trois quart arrière du bloc optique de signalisation selon l'invention après son montage sur le véhicule ;
- la figure 4 est une vue agrandie en perspective de la patte plane ménagée dans le bloc optique d'éclairage ;
- la figure 5 est une vue agrandie en perspective de l'élément d'ancrage inférieur du bloc optique de signalisation ; et
- la figure 6 est une vue de côté agrandie de la zone d'ancrage entre les blocs optiques de signalisation et d'éclairage.

### Description détaillée d'un mode préféré de réalisation

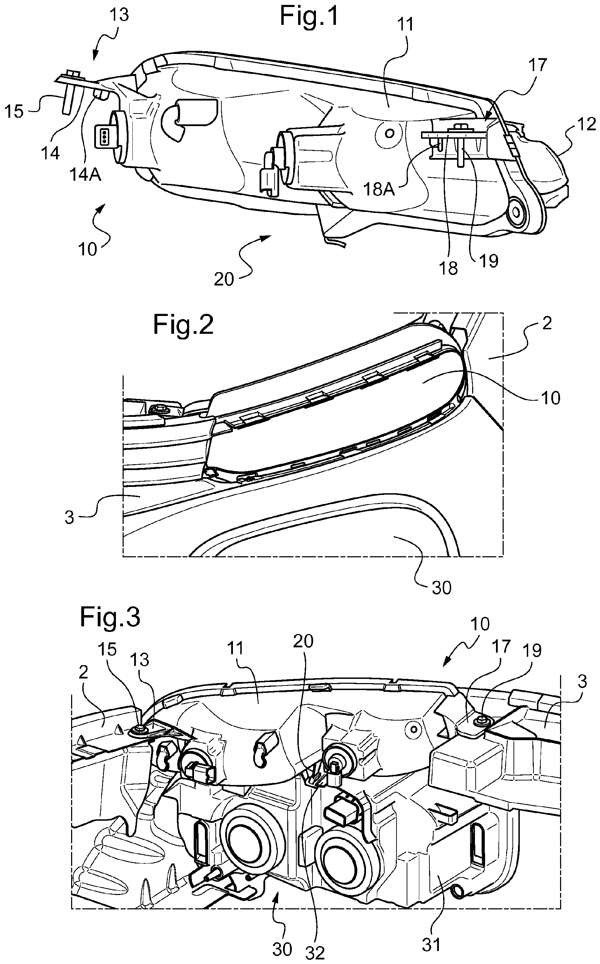

La figure 1 représente un bloc optique avant de signalisation 10 d'un véhicule automobile selon l'invention destiné à être monté sur la structure de caisse de ce véhicule au dessus d'un bloc optique avant d'éclairage 30 en s'intégrant aux contours des pièces de carrosserie adjacentes et au pare-choc comme illustré sur la figure 2.

Dans la description qui va suivre et par convention, les termes « avant », « arrière », « inférieur », « supérieur », « longitudinal » et « transversal » seront définis par rapport à la position de montage de ce bloc optique de signalisation 10 sur un tel véhicule.

Le bloc optique de signalisation 10 comporte un boîtier 11 renfermant un feu diurne ainsi qu'un feu clignotant et dont le bord périphérique supporte une glace de couverture transparente 12.

Le boîtier 11 comporte des éléments d'ancrage permettant le montage du bloc optique de signalisation 10 sur la structure de caisse du véhicule.

En l'espèce, ce boîtier 11 comprend deux éléments d'ancrage supérieurs 13, 17 disposés à ses deux extrémités latérales, ainsi qu'un élément d'ancrage inférieur 20 disposé dans sa partie basse et centré latéralement.

Les éléments d'ancrage latéraux supérieurs 13, 17 comprennent chacun une patte plane 14, 18 venue de moulage avec le boîtier 11 et munie d'un perçage destiné à recevoir une vis 15, 19 pour assurer leur fixation respectivement sur l'aile latérale 2 et sur le pare-choc avant 3 du véhicule (figure 3).

Chacune de ces pattes 14, 18 comprend également un pion 14A, 18A saillant de sa face inférieure et destiné à s'insérer dans un trou correspondant ménagé respectivement sur l'aile 2 et le pare-choc 3 pour assurer un pré-maintien du bloc optique de signalisation 10 avant le vissage des deux éléments d'ancrage latéraux supérieurs 13, 17.

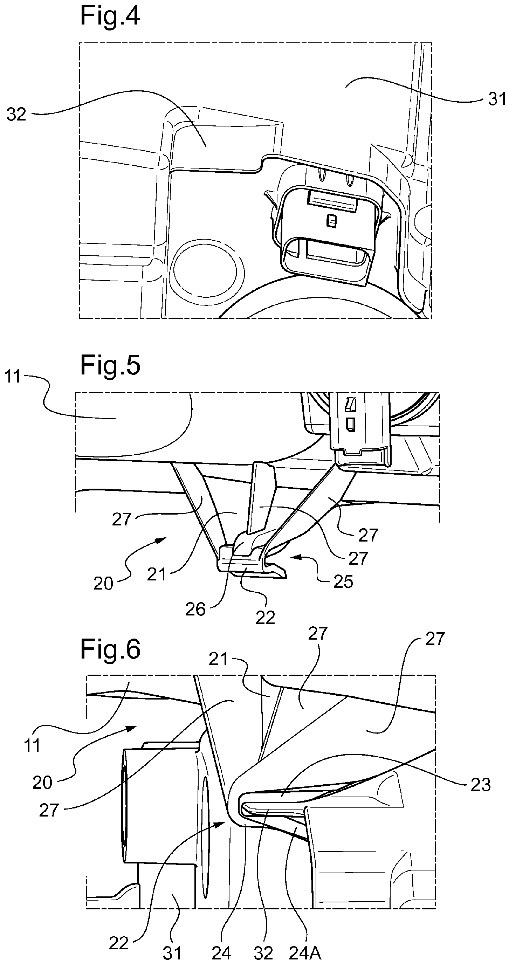

L'élément d'ancrage inférieur 20 est prévu pour coopérer, lors du montage du bloc optique de signalisation 10 sur la structure de caisse, avec une plaque plane rigide 32 s'étendant horizontalement dans la partie arrière haute du boîtier 31 d'un bloc optique d'éclairage 30 renfermant des feux d'éclairage (feux de route, de croisement et de position) et préalablement monté sur cette structure de caisse (figure 4).

Avantageusement, l'élément d'ancrage inférieur 20 et la plaque plane rigide 32 sont respectivement venus de matière par moulage avec le corps principal du boîtier 11 et avec celui du boîtier 31, à partir d'un polymère thermoplastique approprié tel que le polypropylène ou l'acrylonitrile butadiène styrène (ABS).

Cet élément d'ancrage inférieur 20 comprend une rampe d'engagement 21 raccordée par son extrémité supérieure au corps principal du boîtier 11 et s'étendant en dessous de ce dernier en s'inclinant vers l'arrière selon une pente prononcée avec la verticale, comprise de préférence entre 50 et 70 % (figures 5 et 6).

L'élément d'ancrage inférieur 20 comprend également une patte rigide 22 recourbée en forme de U dont l'ouverture est tournée vers l'avant et qui s'étend sensiblement horizontalement dans le prolongement de l'extrémité inférieure de rampe d'engagement 21.

Cette patte en U 22 comprend une branche supérieure 23 raccordée par son extrémité avant à l'extrémité inférieure de la rampe d'engagement 21, et une branche inférieure 24 sensiblement parallèle à la branche supérieure 23 dont l'extrémité libre 24A est évasée (figure 6).

L'espace entre les deux branches 23, 24 forme un logement de réception 25 dont la hauteur définie par l'écartement entre les deux branches 23, 24 correspond à l'épaisseur de la plaque plane 32.

L'élément d'ancrage inférieur 20 comporte en outre des moyens pour renforcer sa rigidité.

Ces moyens de renfort comprennent une nervure arquée 26 s'étendant longitudinalement au dessus de la branche supérieure 23 de la patte en U 22, ainsi que trois ailettes 27 s'étendant transversalement depuis la face arrière de la rampe d'engagement 21 et reliant la branche supérieure 23 de la patte en U 22 au corps principal du boîtier 11.

On va maintenant décrire rapidement les opérations d'assemblage du bloc optique de signalisation 10 sur la structure de caisse du véhicule.

Dans un premier temps, l'opérateur amène par le compartiment moteur le bloc optique 10 vers son logement en faisant coulisser progressivement d'arrière en avant la partie inférieure du corps principal de son boîtier 11 le long de la partie supérieure du corps principal du boîtier 31 du bloc optique d'éclairage 30, et ce jusqu'à ce la rampe d'engagement 21 de l'élément d'ancrage inférieure 20 vienne en appui contre le bord avant de la plaque plane rigide 32.

La poursuite de ce mouvement de coulissement du bloc optique de signalisation 10 entraine le déplacement de ce bord avant de la plaque 32 le long de la rampe d'engagement 21, ce qui provoque un léger basculement de l'avant du boîtier 11 vers le haut.

Lorsque le bord avant de la plaque 32 atteint l'extrémité arrière de la rampe 21, cette plaque 32 commence alors à s'engager à l'intérieur du logement formé par la patte en U (l'extrémité libre évasée 24A de sa branche inférieure 24 évitant tout risque de glissement du bord avant de la plaque 32 en dessous de la patte 24).

L'opérateur n'a alors plus qu'à continuer à pousser le boîtier 11 vers l'avant jusqu'à ce que le bord avant de la plaque 32 atteigne le fond de la patte en U, tel qu'illustré par la figure 6.

Le bloc optique de signalisation 10 est alors verrouillé verticalement du fait de la correspondance entre la hauteur du logement 25 et l'épaisseur de la plaque 32.

L'opérateur peut ensuite pré-positionner les éléments d'ancrage latéraux supérieurs 14, 18 en insérant les pions de centrage 14A, 18A dans les trous correspondants ménagés sur l'aile 2 et le pare-choc 3, avant d'opérer leur vissage à l'aide d'une visseuse électrique.

Ce pré-positionnement n'est réalisable que si la plaque 32 s'est bien insérée dans la patte en U 22 de l'élément d'ancrage inférieur 20. En effet, dans l'éventualité où cette plaque 32 aurait glissée sous cette patte 22, les éléments d'ancrage latéraux supérieurs seraient alors situés trop hauts pour pourvoir être pré-positionnés simultanément.

L'élément d'ancrage inférieur 20 joue ainsi également le rôle de détrompeur pour l'opérateur en charge du montage.

Selon des variantes non représentées, le bloc optique de signalisation ne présente qu'un seul élément d'ancrage supérieur ou plus de deux tels éléments.

Selon d'autres variantes non représentées, l'élément d'ancrage inférieur est positionné différemment, ce dernier étant par exemple décalé latéralement par rapport à la zone centrale du projecteur.

Selon encore d'autres variantes non représentées, les moyens de renfort de cet élément d'ancrage inférieur peuvent également varier. Ainsi, la nervure arquée peut être absente tandis que le nombre et/ou la conformation des ailettes sont différents.

D'une manière générale, on rappelle que la présente invention est définie par les revendications annexées, et ne se limite pas aux formes de réalisation décrites et représentées, mais englobe toute variante d'exécution à la portée de l'homme du métier.

## Revendications

1. Véhicule automobile comportant un bloc optique de signalisation et un bloc optique d'éclairage, ledit bloc optique de signalisation comportant un boîtier (11) et ledit bloc optique d'éclairage comportant un boîtier (31) renfermant au moins un feu d'éclairage, ledit bloc optique de signalisation comportant en outre des moyens d'ancrage (13, 17, 20) pour le montage dudit bloc optique de signalisation sur la structure de caisse dudit véhicule, **caractérisé en ce que** le boîtier (11) du bloc optique de signalisation renferme au moins un feu diurne, et **en ce que** lesdits moyens d'ancrage comporte un élément d'ancrage inférieur (20) disposé en partie basse dudit boîtier (11) et comprenant une patte rigide en forme de U (22) formée par deux branches supérieure (23) et inférieure (24) sensiblement parallèles, s'étendant sensiblement horizontalement et dont l'ouverture est tournée vers l'avant, la partie haute du boîtier (31) du bloc optique d'éclairage comprenant une plaque plane rigide (32), ladite patte en U (22) définissant entre ses deux branches supérieure (23) et inférieure (24) un logement (25) recevant la plaque plane rigide (32), l'écartement entre lesdites branches (23, 24) correspondant à l'épaisseur de ladite plaque plane (32) de sorte à verrouiller verticalement ledit bloc optique de signalisation vis-à-vis dudit bloc optique d'éclairage (30) et de ladite structure de caisse.

2. Véhicule selon la revendication 1, **caractérisé en ce que** ledit élément d'ancrage inférieur (20) comprend également une rampe d'engagement (21) qui s'étend sous le corps principal du boîtier (11) du bloc optique de signalisation en s'inclinant vers l'arrière jusqu'à ladite patte en U (22).

3. Véhicule selon la revendication 2, **caractérisé en ce que** ladite patte en U (22) s'étend dans le prolongement de ladite rampe d'engagement (21) en étant raccordée à cette dernière par sa branche supérieure (23).

4. Véhicule selon l'une des revendications 2 ou 3, **caractérisé en ce que** ledit élément d'ancrage inférieur (20) comporte au moins une ailette de renfort (27) s'étendant transversalement depuis la face arrière de ladite rampe d'engagement (21) et reliant la branche supérieure (23) de ladite patte en U (22) au corps principal du boîtier (11) du bloc optique de signalisation.

5. Véhicule selon l'une des revendications 1 à 4, **caractérisé en ce que** ledit élément d'ancrage inférieur (20) comporte une nervure arquée de renfort (26) s'étendant longitudinalement au dessus de la branche supérieure (23) de ladite patte en U (22).

6. Véhicule selon l'une des revendications 1 à 5, **caractérisé en ce que** l'extrémité libre de la branche inférieure (24) de ladite patte en U (22) est évasée.

7. Véhicule selon l'une des revendications 1 à 6, **caractérisé en ce que** ledit élément d'ancrage inférieur (20) est venu de matière par moulage avec le corps principal dudit boîtier (11).

8. Véhicule selon l'une des revendications 1 à 7, caractérisé en ce ledit bloc optique de signalisation comporte deux éléments d'ancrage latéraux supérieurs (13, 17) comprenant chacun un pion (14A, 18A) destiné à s'insérer dans un trou correspondant ménagé sur la dite structure de caisse lors dudit montage.

9. Véhicule selon l'une des revendications 1 à 8, **caractérisé en ce que** ladite plaque plane (32) est venue de matière par moulage avec le corps principal du boîtier (31) du bloc optique d'éclairage.

## Patentansprüche

1. Kraftfahrzeug, das eine Signalleuchte und einen Scheinwerfer umfasst, wobei die Signalleuchte ein Gehäuse (11) umfasst und der Scheinwerfer ein Gehäuse (31) umfasst, das mindestens eine Leuchte einschließt, wobei die Signalleuchte außerdem Verankerungsmittel (13, 17, 20) für die Montage der Signalleuchte auf der Aufbaustruktur des Fahrzeugs umfasst, **dadurch gekennzeichnet, dass** das Gehäuse (11) der Signalleuchte mindestens eine Tagfahrleuchte einschließt, und dass die Verankerungsmittel ein unteres Verankerungselement (20) umfassen, das im unteren Teil des Gehäuses (11) angeordnet ist und eine starre Pratze in U-Form (22) umfasst, die aus einem oberen Schenkel (23) und einem unteren Schenkel (24), die im Wesentlichen parallel sind, gebildet ist, die sich im Wesentlichen horizontal erstreckt und deren Öffnung nach vorn gerichtet ist, wobei der obere Teil des Gehäuses (31) des Scheinwerfers eine starre flache Platte (32) umfasst, wobei die U-Pratze (22) zwischen ihrem oberen Schenkel (23) und unteren Schenkel (24) eine Aufnahme (25) definiert, die die starre flache Platte (32) aufnimmt, wobei der Abstand zwischen den zwei Schenkeln (23, 24) der Stärke der flachen Platte (32) derart entspricht, dass die Signalleuchte gegenüber dem Scheinwerfer (30) und der Aufbaustruktur vertikal verriegelt wird.

2. Fahrzeug nach Anspruch 1, **dadurch gekennzeichnet, dass** das untere Verankerungselement (20) auch eine Eingriffsrampe (21) umfasst, die sich unter dem Hauptkörper des Gehäuses (11) der Signalleuchte erstreckt, indem sie sich bis zu der U-Pratze (22) nach hinten neigt.

3. Fahrzeug nach Anspruch 2, **dadurch gekennzeichnet, dass** sich die U-Pratze (22) in der Verlängerung der Eingriffsrampe (21) erstreckt, wobei sie an diese Letztere durch ihren oberen Schenkel (23) angeschlossen ist.

4. Fahrzeug nach einem der Ansprüche 2 oder 3, **dadurch gekennzeichnet, dass** das untere Verankerungselement (20) mindestens eine Verstärkungsrippe (27) umfasst, die sich quer von der hinteren Fläche der Eingriffsrampe (21) erstreckt und den oberen Schenkel (23) der U-Pratze (22) mit dem Hauptkörper des Gehäuses (11) der Signalleuchte verbindet.

5. Fahrzeug nach einem der Ansprüche 1 bis 4, **dadurch gekennzeichnet, dass** das untere Verankerungselement (20) eine gewölbte Verstärkungsrippe (26) umfasst, die sich längs oberhalb des oberen Schenkels (23) der U-Pratze (22) erstreckt.

6. Fahrzeug nach einem der Ansprüche 1 bis 5, **dadurch gekennzeichnet, dass** das freie Ende des unteren Schenkels (24) der U-Pratze (22) aufgeweitet ist.

7. Fahrzeug nach einem der Ansprüche 1 bis 6, **dadurch gekennzeichnet, dass** das untere Verankerungselement (20) aus einem Stück durch Formen mit dem Hauptkörper des Gehäuses (11) hergestellt ist.

8. Fahrzeug nach einem der Ansprüche 1 bis 7, **dadurch gekennzeichnet, dass** die Signalleuchte zwei obere seitliche Verankerungselemente (13, 17) umfasst, die jeweils einen Zapfen (14A, 18A) umfassen, der dazu bestimmt ist, sich in eine entsprechende Bohrung zu fügen, die auf der Aufbaustruktur bei der Montage eingerichtet wird.

9. Fahrzeug nach einem der Ansprüche 1 bis 8, **dadurch gekennzeichnet, dass** die flache Platte (32) aus einem Stück durch Formen mit dem Hauptkörper des Gehäuses (31) des Scheinwerfers hergestellt ist.

## Claims

1. A motor vehicle comprising an optical signalling unit and an optical lighting unit, said optical signalling unit comprising a housing (11) and said optical lighting unit comprising a housing (31) containing at least one lighting lamp, said optical signalling unit further comprising anchoring means (13, 17, 20) for the mounting of said optical signalling unit on the body structure of said vehicle, **characterized in that** the housing (11) of the optical signalling unit contains at least one daytime running lamp, and **in that** said anchoring means comprises a lower anchoring element (20) disposed in the bottom portion of said housing (11) and including a rigid U-shaped bracket (22) formed by two substantially parallel upper (23) and lower (24) branches, extending substantially horizontally and the opening of which faces towards the front, the upper portion of the housing (31) of the optical lighting unit including a rigid flat plate (32), said U-shaped bracket (22) defining between its two upper (23) and lower (24) branches a seat (25) receiving the rigid flat plate (32), the spacing between said branches (23, 24) corresponding to the thickness of said flat plate (32) so as to vertically lock said optical signalling unit with respect to said optical lighting unit (30) and said body structure.

2. The vehicle according to Claim 1, **characterized in that** said lower anchoring element (20) also includes an engagement ramp (21) which extends beneath the main body of the housing (11) of the optical signalling unit, inclining towards the rear up to the U-shaped bracket (22).

3. The vehicle according to Claim 2, **characterized in that** said U-shaped bracket (22) extends in the extension of said engagement ramp (21), being connected to the latter by its upper branch (23).

4. The vehicle according to one of Claims 2 or 3, **characterized in that** said lower anchoring element (20) comprises at least one reinforcement wing (27) extending transversely from the rear face of said engagement ramp (21) and connecting the upper branch (23) of said U-shaped bracket (22) to the main body of the housing (11) of the optical signalling unit.

5. The vehicle according to one of Claims 1 to 4, **characterized in that** said lower anchoring element (20) comprises an arcuate reinforcement rib (26) extending longitudinally above the upper branch (23) of said U-shaped bracket (22).

6. The vehicle according to one of Claims 1 to 5, **characterized in that** the free end of the lower branch (24) of said U-shaped bracket (22) is flared.

7. The vehicle according to one of Claims 1 to 6, **characterized in that** said lower anchoring element (20) is formed as an integral part by moulding with the main body of said housing (11).

8. The vehicle according to one of Claims 1 to 7, **characterized in that** said optical signalling unit comprises two upper lateral anchoring elements (13, 17), each including a pin (14A, 18A) intended to be inserted in a corresponding hole arranged on said body structure during said mounting.

9. The vehicle according to one of Claims 1 to 8, **characterized in that** said flat plate (32) is formed as an integral part by moulding with the main body of the housing (31) of the optical lighting unit.
